# EUROPÄISCHE PATENTANMELDUNG

(11) **EP 2 232 984 A1**
(43) Veröffentlichungstag der Anmeldung: **29.09.2010**
(21) Anmeldenummer: 10002406.6
(22) Anmeldetag: 09.03.2010
(51) Int. Cl.: A01G 25/09

(54) **Vorrichtung zum Antrieb und zur Steuerung von Beregnungsmaschinen**

(30) Priorität: 28.03.2009 DE 102009015469
(71) Anmelder: Wollny, Hubertus, 55234 Bechtolsheim (DE)
(72) Erfinder: Wollny, Hubertus, 55234 Bechtolsheim (DE)

(57) **Zusammenfassung**

Es wird eine Vorrichtung beschrieben zum Antrieb und zur Steuerung von BeregnungsMaschinen durch Gleichstrommotoren, die ihre Stromversorgung aus Solarzellen in Verbindung mit Batterien schöpfen.

Erfindungsgemäß wird die Einzugsgeschwindigkeit geregelt, indem aus Impulsen der Überwachungseinrichtung die Drehzahl der Elektromotoren justiert wird.

Der Energieaufwand für den Betrieb von Beregnungsmaschinen wird dadurch reduziert, dass der zusätzliche Druckaufbau für den Antrieb der Wasserturbinen entfällt, und die Führung des Wassers innerhalb der Maschine ganz wesentlich optimiert wird.

## Beschreibung

Die Erfindung betrifft eine Vorrichtung zum Antrieb und zur Steuerung von BeregnungsMaschinen, die vornehmlich in landwirtschaftlichen Kulturen eingesetzt werden. Es handelt sich dabei um Beregnungsmaschinen, die am Feldrand stehen und eine Wasserverteilungs-Einrichtung durch die Feldkulturen ziehen, sogenannter "Regnervorschub".

Anlagen dieser Art sind bekannt. Große Rohrtrommeln werden in rotierende Bewegung gesetzt, die in ihrem Bewegungsablauf ein abgewickeltes biegsames Rohr aufspulen.

Im Falle des Regnervorschubes steht die Rohrtrommel am Feldrand. Das Rohr wird mittels eines Traktors in die Feldkultur gezogen. Am Ende des ausgezogenen Rohres ist die Wasserverteileinrichtung angeschlossen. Durch die danach bewirkte Trommelbewegung in entgegengesetzter Richtung wird das Rohr mit dem Regengerät wieder eingezogen. Dabei wird das Beregnungswasser verteilt.

Das biegsame Rohr ist Zugelement und Wasserführung zugleich.

Der Trommelantrieb geschieht über Wasserturbinen, Verbrennungsmotoren, hydraulische Rotationsmotoren oder hydraulische Kolben. Dabei wird ein Bewegungseffekt erzielt, der einen kontinuierlichen Vorschub der Regeneinrichtung bewirkt.

Am häufigsten werden derzeit Wasserturbinen verwandt. Um solche Turbinen unter Last zu betreiben, wird ein Druckverbrauch von etwa 1 bar, in einigen Fällen bis zu 2 bar verursacht. Um diesen Druck zu erzeugen müssen an den Wasserpumpen, neben dem Druck für das Beregnungswasser beachtliche Kräfte aufgewandt werden, während an der Abtriebswelle der Turbine nur ein Bruchteil der eingesetzten Kraft zur Verfügung steht.

Durch Überwachung mit Sensoren wird der Regnervorschub in vorgegebenen Geschwindigkeiten gesteuert. Zu diesem Zweck wird die Drehzahl der Turbine verändert. Dies geschieht in dem man den Wasserdurchsatz in der Turbine in der Regel mittels Beipass- ventielen den Erfordernissen anpasst.

Beregnungsmaschinen werden heute weltweit in vielen Ausführungsformen angeboten, die sich im Wesentlichen durch die Länge und den Durchmesser des wasserführenden, biegsamen Rohres unterscheiden. Der Energieaufwand zum Wiedereinzug des ausgelegten Rohres wird dabei von dieser Gegebenheit bestimmt.

Die Aufgabe der Erfindung besteht darin, eine Vorrichtung zu schaffen, die den Antrieb der Trommel bewirkt, ohne dass ein Verlust an fossiler Energie entsteht.

Erfindungsgemäß wird die Aufgabe dadurch gelöst, dass zum Antrieb der Trommel ein Gleichstrom - Elektromotor zum Einsatz kommt, der seine Energie aus Solarzellen, in Verbindung mit Batterien bezieht.

Um die Funktionsfähigkeit der Vorrichtung zu erreichen, richtet sich die Erfindung auf 3 zusammenhängende Komplexe
a) den Antrieb
b) die Art der Geschwindigkeitssteuerung
c) die Bereitstellung der benötigten Energie.

Einzelheiten, Merkmale und Vorteile der Erfindung ergeben sich aus der folgenden Beschreibung, den schematischen Skizzen sowie den Patent- und Schutzansprüchen.

### Zu a)

Für den Antrieb werden Gleichstrom-Elektromotoren eingesetzt. Die Motoren können verschiedene Leistungsbereiche, je nach dem Kraftbedarf des Trommelantriebes haben, der sich nach den Gegebenheiten des Rohres bestimmt. Als Motoren können Gleichstrommotoren mit fest angeflanschten
Untersetzungsgetrieben ausgewählt werden. Die Getriebe können Stirnradgetriebe, Schneckenradgetriebe, Panetengetriebe oder ähnliche sein.

Nach dem Elektromotor kommt erfindungsgemäß eine Drehzahlverstelleinrichtung zum Einsatz, um die Einzugsgeschwindigkeit und damit die Niederschlagsmenge vorzuwählen. Dies kann in Form von stufenlos regelbaren Verstellscheiben (sogenannte Variatoreinrichtungen) oder ähnlichen erfolgen.

Die weitere Antriebsübertragung auf die Trommel erfolgt in der vieltausendfach bekannten Weise über Ein- oder Mehrgang Regenmaschinengetriebe und weiterführend mit Ketten- oder Ritzelkombinationen auf die Trommel.

### zu b)

Da bei gleichbleibendem Antrieb der Trommel und bei steigendem Durchmesser des Rohrpaketes die Einzugsgeschwindigkeit unkontrolliert größer würde, wird über Kontaktwalzen an dem einzuziehenden Rohr die Geschwindigkeit gemessen und elektronisch über Pulsbreitensteuerung, oder ähnlich, die Drehzahl der Elektromotoren angepasst bzw. reduziert.

### zu c)

Installierte Batterien mit entsprechender Kapazität halten den Betriebsstrom für die elektronische Betriebsüberwachung und den Antrieb der Elektromotoren bereit. Die Batterien werden nachgeladen über Solarpanell, die in ihrer Größe so bemessen sind, dass sie im Tagesablauf bei Ausnutzung der Lichtstunden die verbrauchte Energie plus einer genügenden Reserve, auch für die Nachtstunden, anliefern können.

Um die Sonneneinstrahlung in optimalem Winkel auszunutzen sind die einzelnen Module nach den örtlichen Empfehlungen zunächst in einem Anstellwinkel montiert und auch individuell verstellbar. Zusätzlich ist das gesamte Panell drehbar angeordnet, damit es zur Sonne ausgerichtet werden kann.

Die Batterien sind transportabel und austauschbar angeordnet.

Das Solarpanell kann als komplette Einheit auf der Regenmaschine aufgebaut sein. Erfindungsgemäß ist es aber auch als freistehende Einheit fahrbar oder stationär zu betreiben.

Erläuterungen zu den schematischen Skizzen:

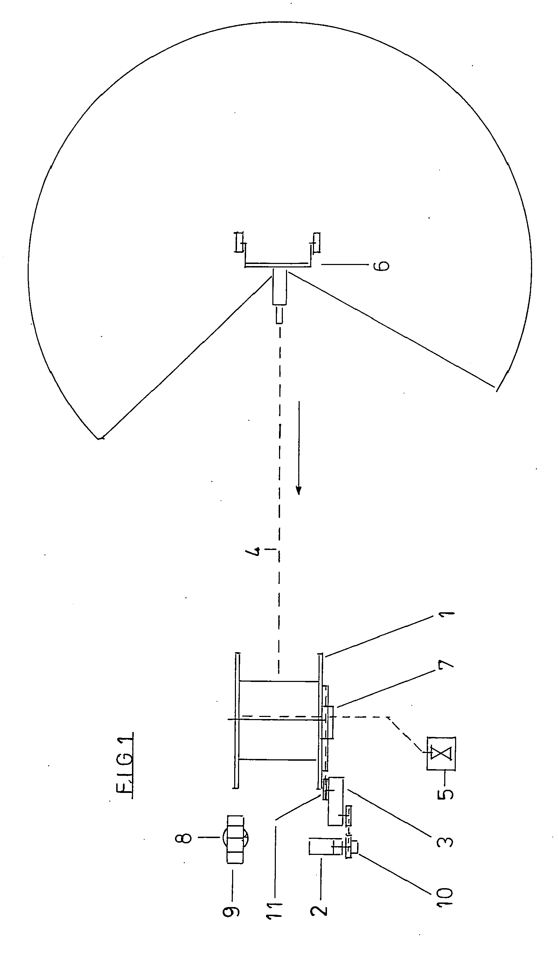

- FIG 1: zeigt eine Draufsicht auf die Anordnung im Feldeinsatz.
(1) ist die Trommel zur Aufnahme des ausgezogenen Rohres (4) mit anschließender Wasserverteileinrichtung (6) ( Regner auf Fahrgestell)
- FIG 2: zeigt die gleiche Maschinenanordnung in Seitenansicht
(2) zeigt den Elektromotor mit (10) der Drehzahlverstelleinrichtung und
(3) das Regenmaschinengetriebe, danach kommt (11) die Ketten- oder Ritzelkombination,
(7) zeigt die Unterbringung der Batterien an einem beliebigen, gut zugänglichen Platz auf der Maschine,
(8) ist der drehbare Unterbau für (9) das Solarpanell,
(5) zeigt die Wasserversorgungsstelle, die ganz nach der örtlichen Gegebenheit gestaltet ist.

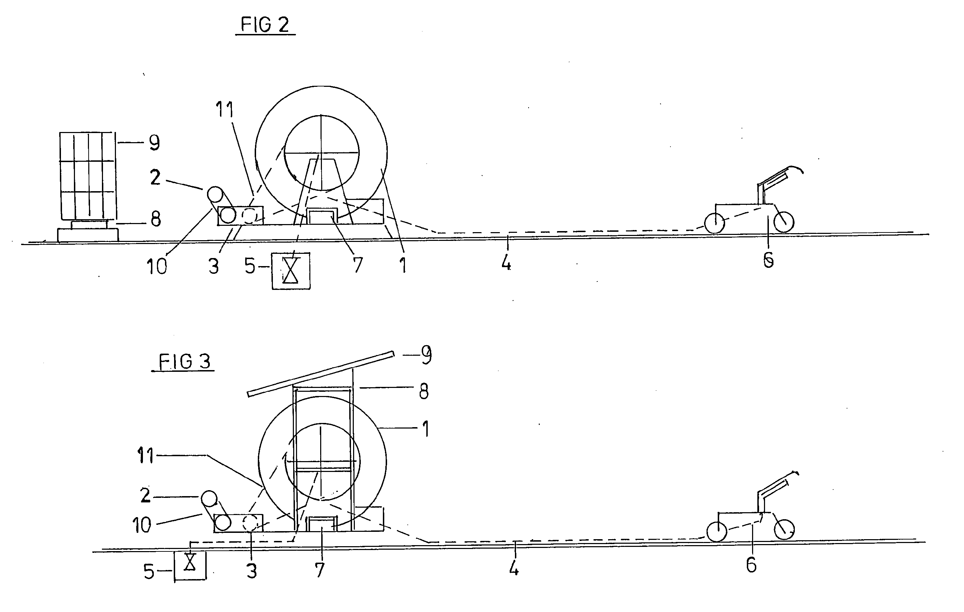

- FIG 3: zeigt die gleiche Maschine, jedoch mit dem Solarpanell (9) angeordnet über der Trommel (1),
(8) auf einer drehbaren Unterkonstruktion,
(5) ist die Wasserversorgung,
(2) der Elektromotor,

(10) die Drehzahlverstelleinrichtung,
(3) das Regenmaschinengetriebe,
(11) die Ketten- oder Ritzelkombination,
(7) die Batterien,
(4) das ausgezogene Rohr,
(6) die Wasserverteileinrichtung.

## Patentansprüche

1. Vorrichtung zum Antrieb und zur Steuerung von Beregnungsmaschinen mittels Gleichstrom - Elektromotoren, die über Getriebe die Rohrtrommel in Bewegung setzen und **dadurch gekennzeichnet, dass** der Antriebsmotor seinen Strom aus Solarzellen in Verbindung mit Batterien bezieht.

2. Vorrichtung nach Anspruch 1, **dadurch gekennzeichnet, dass** die Solarpanell direkt auf der Regenmaschine aufgebaut sind.

3. Vorrichtung nach Anspruch 1, **dadurch gekennzeichnet, dass** die Solarpanell als freistehende Einheit zum Einsatz kommen.

4. Vorrichtung nach Anspruch 1 bis 3, **dadurch gekennzeichnet, dass** die Solarpanell auf drehbarem Rahmen montiert sind.

5. Vorrichtung nach Anspruch 1 bis 4, **dadurch gekennzeichnet, dass** die Batterien transportabel und austauschbar sind.

6. Vorrichtung nach Anspruch 1 bis 5, **dadurch gekennzeichnet, dass** die Einzugsgeschwindigkeit durch einen Sensor überwacht wird, der nach Bedarf die Drehzahl des Elektromotors elektronisch verändert.
